Europäisches Patentamt

**European Patent Office**

Office européen des brevets

(11) Publication number: **0 151 037**
**B1**

# EUROPEAN PATENT SPECIFICATION

(45) Date of publication of patent specification: **09.11.88**

(21) Application number: **85300631.0**

(22) Date of filing: **30.01.85**

(51) Int. Cl.⁴: **B 60 K 41/14,** B 60 K 41/22,
F 16 D 27/16

(54) **System for controlling the clutch current of an electromagnetic clutch for a vehicle.**

(30) Priority: **31.01.84 JP 15418/84**

(43) Date of publication of application:
**07.08.85 Bulletin 85/32**

(45) Publication of the grant of the patent:
**09.11.88 Bulletin 88/45**

(84) Designated Contracting States:
**CH DE FR GB IT LI NL**

(56) References cited:
**EP-A-0 092 950**
**EP-A-0 095 132**
**DE-A-3 140 229**
**FR-A-1 257 831**
**GB-A-2 080 910**
**GB-A-2 081 412**
**GB-A-2 083 588**

(73) Proprietor: **FUJI JUKOGYO KABUSHIKI KAISHA
7-2 Nishishinjuku 1-chome Shinjuku-ku
Tokyo (JP)**

(72) Inventor: **Sakakiyama, Ryuzo
1-21 Takamatsu
Toshima-ku Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

## Description

The present invention relates to a system for controlling the clutch current of an electromagnetic clutch disposed between the crankshaft of an engine and an infinitely variable transmission of a motor vehicle.

The control system for the electromagnetic clutch is arranged to increase clutch current flowing in the coil of the electromagnetic clutch with respect to the increase of the engine speed, when the vehicle is started. When vehicle speed exceeds a predetermined speed (for example 20 km/h), a lock-up current flows through the coil, so that the clutch is fully engaged.

A power transmission system comprising the electromagnetic clutch and an infinitely variable belt-drive automatic transmission has been proposed by the applicant. In the automatic transmission, various operating ranges such as D(driving)-range, Ds-range, N(neutral)-range, R(reverse)-range and P(parking)-range are provided and the selection of the range is done by a selector lever. In the Ds-range, the transmission ratio is varied in a high engine speed range in order to provide a powerful driving of the vehicle. Accordingly, operation of the selector lever to change from the D-range to the Ds-range or vice versa is often performed during driving. For the selection of the ranges, a D-range switch and a Ds-range switch are operated by the selector lever. However, there is a dead range between D-range switch operation and Ds-range switch operation during the movement of the selector lever, where no signal occurs. In the dead range, clutch current is cut off to disengage the automatic transmission from the engine, so that power transmission is cut off during driving.

It is known e.g. from EP-A-95132 to control clutch engagement and disengagement during selecting operations, in dependence on external operating parameters, e.g. vehicle speed.

An object of the present invention is to provide a control system for an electromagnetic clutch which can avoid the defect of power transmission cut off during the selecting operation of driving ranges.

In accordance with the present invention, the electromagnetic clutch is kept in engagement during the selecting operation by delaying a signal of a range switch.

The present invention relates to a system for controlling the clutch current of an electromagnetic clutch for a vehicle having an infinitely variable transmission and a selector lever for selecting one of a number of operating ranges in the infinitely variable transmission, the ranges including first and second forward driving ranges which differ in transmission ratio, the system comprising a first driving range switch and a second driving range switch operated at respective positions of the selector lever to change the driving range between the first and second forward driving ranges for producing a respective first signal; a delay circuit reponsive to the first signal for producing a second signal with a delay; and gate means responsive to the second signal for allowing the clutch current to flow; whereby the clutch is kept in engagement during the selecting operation by said delaying of the second signal (S).

The invention will be more readily understood by way of example from the following description of a transmission and control system therefor, reference being made to the accompanying drawings, in which

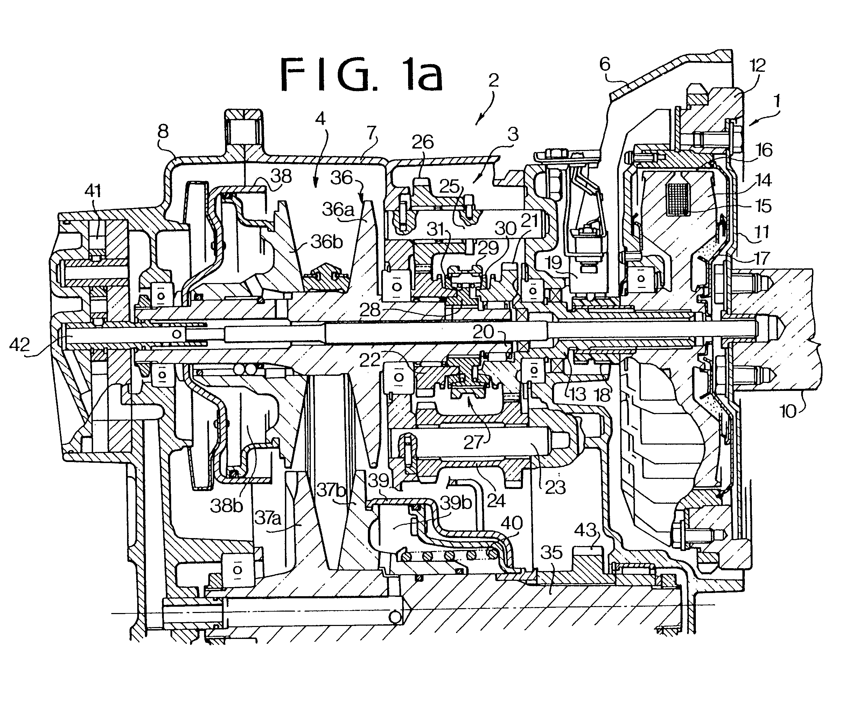

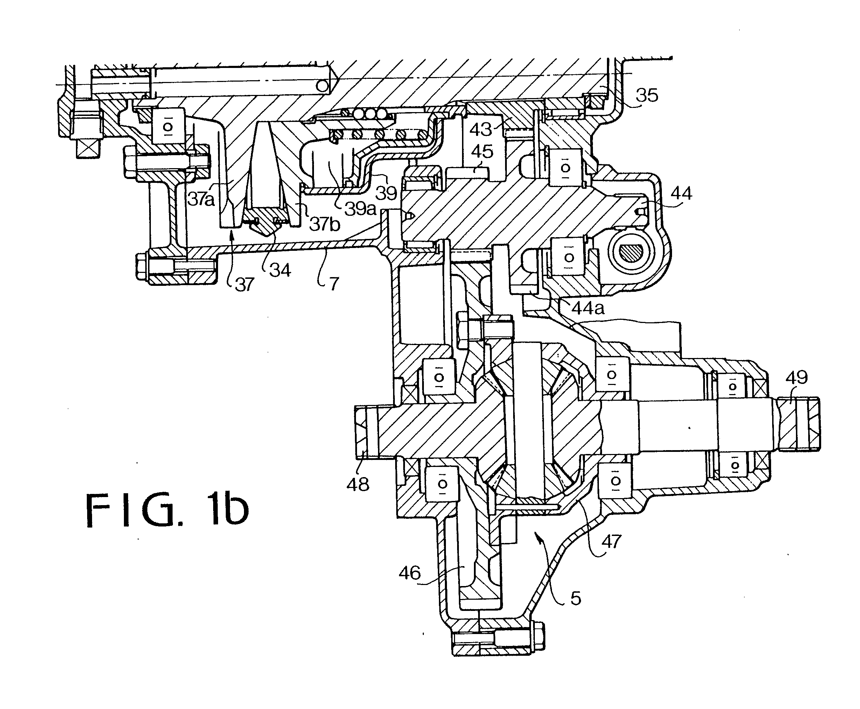

Figures 1a and 1b are sectional views which together show an infinitely variable belt-drive transmission with an electromagnetic clutch;

Figure 2 is a schematic diagram showing the control system; and

Figure 3 is a graph showing the operation of the system.

Referring to Figures la and lb, an infinitely variable belt-drive automatic transmission for a vehicle, to which the present invention is applied, comprises an electromagnetic powder clutch 1, an infinitely variable belt-drive transmission 2, a selector device 3, pulleys and belt device 4, final reduction device 5, and a pressure oil control circuit (not shown). The electromagnetic powder clutch 1 is located in a housing 6, and the selector device 3, pulleys and belt device 4 and final reduction device 5 are located in a main housing 7 and a side housing 8. The crankshaft 10 of an engine (not shown) is connected to an annular drive member 12 through a drive plate 11 of the electromagnetic powder clutch 1. The electromagnetic powder clutch 1 comprises a driven member 14 carrying therein a magnetizing coil 15. The driven member 14 has its outer periphery spaced from the inner periphery of the drive member 12 by a gap 16, and a powder chamber 17 is defined between the drive member 12 and driven member 14. The powder chamber 17 contains powder of magnetic material. The driven member 14 is secured to an input shaft 13 of the belt-drive transmission. A holder secured to the driven member 14 carries slip rings 18 which are electrically connected to the coil 15. The coil 15 is supplied through brushes 19 and slip rings 18 with current from a control circuit for the electromagnetic powder clutch.

When the magnetizing coil 15 is excited by the clutch current, driven member 14 is magnetized to produce a magnetic flux passing through the drive member 12. The magnetic powder is aggregated in the gap 16 by the magnetic flux and the driven member 14 is engaged with the drive member 12 by the powder. On the other hand, when the clutch current is cut off, the drive and driven members 12 and 14 are disengaged from one another.

In the belt-drive transmission 2, the selector device 3 is provided between the input shaft 13 and a main shaft 20. The main shaft 20 is cylindrical and is disposed coaxially with the input shaft 13. The selector device 3 comprises a drive gear 21 integral with input shaft 13, reverse driven gear 22 rotatably mounted on the main shaft 20, and a

synchronizer 27 mounted on the main shaft 20. The drive gear 21 meshes with one of two counter gears 24 rotatably mounted on a shaft 23. Another gear of the counter gears 24 engages with an idler gear 26 rotatably mounted on a shaft 25, which in turn engages with the driven gear 22.

The synchronizer 27 comprises a hub 28 secured to the main shaft 20, a synchronizer sleeve 29 slidably splined to the hub 28, and synchronizer rings 30 and 31. The synchronizer sleeve 29 is adapted to engage with splines of the drive gear 21 or with splines of driven gear 22 through rings 30 or 31.

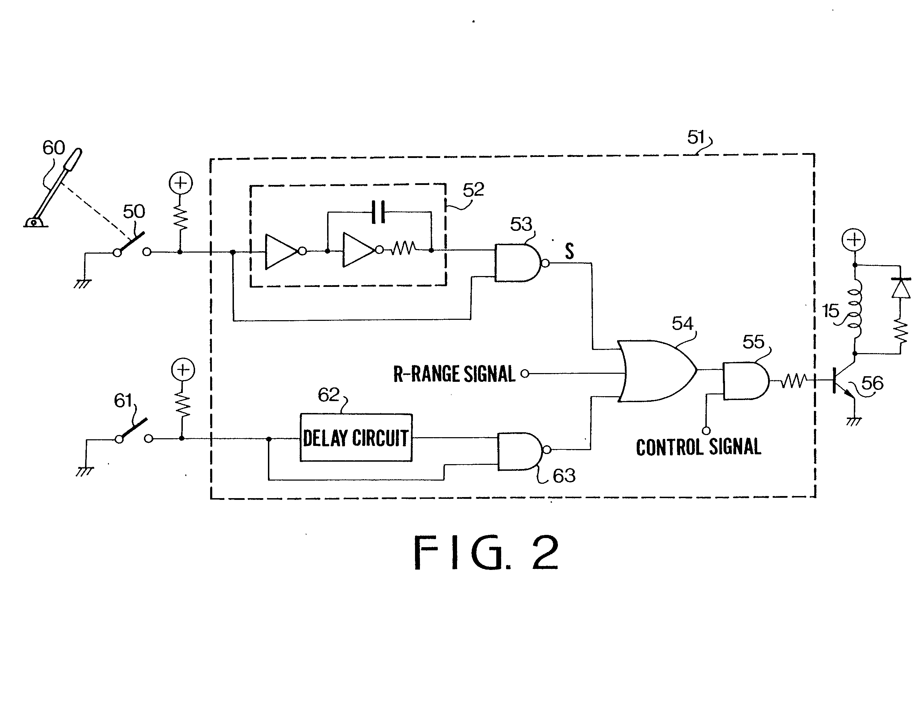

At the neutral position (N range) of a selector lever shown schematically at 60 in Figure 2, sleeve 29 engage neither gear, so that the main shaft 20 is disconnected from the input shaft 13. When the sleeve 29 is engaged with the gear 21, the input shaft 13 is connected to the main shaft 20 through the gear 21 and synchronizer 27 to provide a forward driving position (D, Ds range).

When the sleeve 29 is engaged with the gear 22, the input shaft 13 is connected to the main shaft 20 through gears 21, 24, 26 and 22 to provide a reverse driving position (R range).

The main shaft 20 has an axial passage in which an oil pump driving shaft 42 connected to crankshaft 10 is mounted.

An output shaft 35 is parallel with the main shaft 20. A drive pulley 36 and a driven pulley 37 are mounted on shafts 20 and 35. A fixed conical disc 36a of the drive pulley 36 is integral with main shaft 20 and an axially movable conical disc 36b is axially slidably mounted on the main shaft 20. The movable conical disc 36b also slides in a cylinder secured to the main shaft 20 to form a servo device 38. A chamber of the servo device 38 communicates through the pressure oil control circuit with an oil pump 41, which is driven by shaft 42.

A fixed conical disc 37a of the driven pulley 37 is formed on the output shaft 35 opposite the movable disc 36b and a movable conical disc 37b is slidably mounted on the shaft 35 opposite disc 36a. Movable conical disc 37b has a cylindrical portion in which a piston portion of the output shaft 35 is slidably engaged to form a servo device 39. A chamber of the servo device 39 is communicated with the oil pump 41 through the pressure oil control circuit. A spring 40 urges the movable conical disc 37b towards the fixed conical disc 37a. A drive belt 34 engages with the drive pulley 36 and the driven pulley 37.

Secured to the output shaft 35 is a drive gear 43 which engages with an intermediate reduction gear 44a on an intermediate shaft 44. An intermediate gear 45 on the shaft 44 engages with a final gear 46. Rotation of the final gear 46 is transmitted to axles 48 and 49 of the vehicle driving wheels through a differential 47.

The pressure oil control circuit is responsive to vehicle speed, engine speed and throttle valve position and controls the supply of oil from the oil pump 41 to servo devices 38 and 39 thereby to move discs 36b and 37b. Thus, the transmission ratio is infinitely variable.

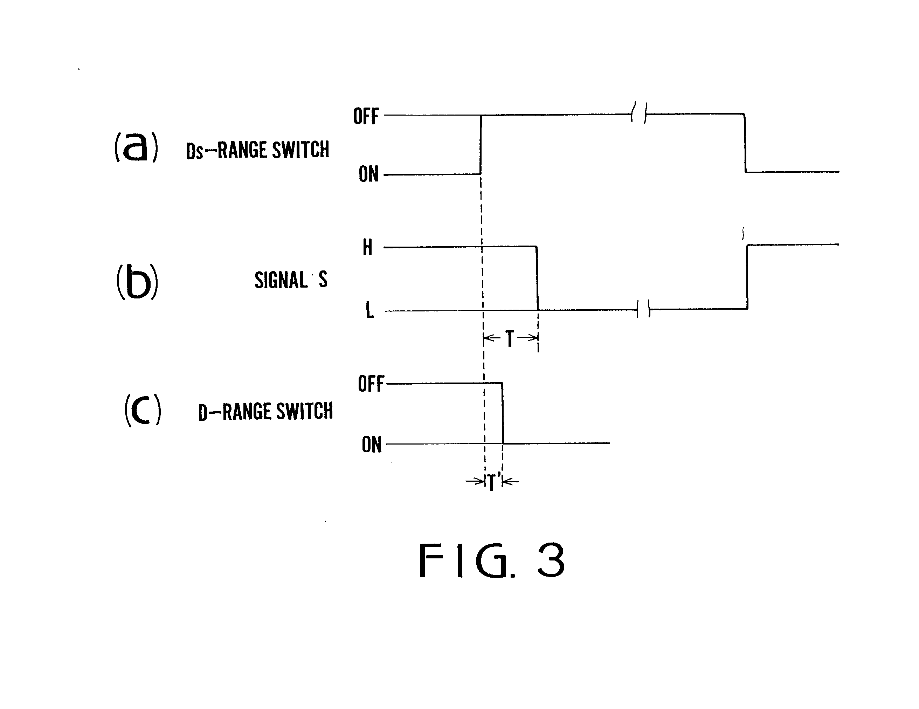

Referring to Figure 2, the control system is provided with a Ds-range switch 50 and a D-range switch 61, each of which is closed to produce a low level signal, when the corresponding range is selected by the selector lever 60. The output of the Ds-range switch is applied to a NAND gate 53 directly and through a delay circuit 52. The delay circuit 52 is adapted to produce a high level output signal with a delay time T (Figure 3(b)), when the Ds-range switch is opened, i.e. when the output signal of the Ds-range switch changes from low level to high level. When the signal of the Ds-range switch changes from high level to low level, the circuit 52 produces a low level signal without delay. Output signal S of the NAND gate 53 is applied to a transistor 56 through an OR gate 54 and an AND gate 55. The OR gate 54 also receives a D-range signal from a D-range switch 61 and an R-range signal from an R-range switch. AND gate 55 receives a control signal for controlling the clutch current, for example for the starting of the vehicle. The transistor 56 is connected in the circuit for the coil 15 of the electromagnetic clutch 1. The D-range switch 61 is connected to OR gate 54 through a delay circuit 62 and a NAND gate 63.

While the Ds-range switch 50 is closed, i.e. during the Ds-range driving of the vehicle, a low level signal is applied to the NAND gate 53 which also receives a low level signal from the delay circuit 52. Accordingly, the output signal S of the NAND gate is at high level, and is applied to the base of the transistor 56 through OR gate 54 and AND gate 55 to render the transistor conductive to maintain the clutch 1 engaged.

When another range such as the D-range is selected, the Ds-range switch 50 is opened, causing the output thereof to go to a high level as shown in Figure 3(a). However, the delay circuit 52 does not produce a high level output signal at once, but produces it with a delay time T. Accordingly, the output signal S of the NAND gate 53 changes from high level to low level only after the delay time T as shown in Figure 3(b). Thus the clutch 1 is kept in engagement for a period T after the opening of the Ds-range switch 50. Therefore, if the D-range switch 61 is closed after a delay time T' as shown in Figure 3(c), the clutch does not become disengaged, provided T is greater than T'. When the N-range is selected, the clutch is disengaged after the delay time T, because no signal is applied to the transistor 56 from D-range switch 61.

When the driving range is changed from the D-range to Ds-range, the D-range switch 61 is opened and subsequently the Ds-range switch 50 is closed. The output signal S of the NAND gate 53 changes to high level immediately switch 50 is closed, the NAND gate 63 produces a high level output signal, which goes low only after a delay period (T as shown in Figure 3) determined by delay circuit 62, like the NAND gate 53. Accordingly, the clutch 1 is not disengaged between the opening of switch 61 and the closing of switch 50.

It will also be understood that the system of the present invention can also be constituted by a microcomputer system.

## Claims

1. A system for controlling the clutch current of an electromagnetic clutch (1) for a vehicle having an infinitely variable transmission (4) and a selector lever (60) for selecting one of a number of operating ranges in the infinitely variable transmission, the ranges including first and second forward driving ranges which differ in transmission ratio, the system comprising a first driving range switch (50) and a second driving range switch (61) operated at respective positions of the selector lever (60) to change the driving range between the first and second forward driving ranges for producing a respective first signal; a delay circuit (52, 53, 62, 63) reponsive to the first signal for producing a second signal (S) with a delay; and gate means (54) responsive to the second signal (S) for allowing the clutch current to flow; whereby the clutch (1) is kept in engagement during the selecting operation by said delaying of the second signal (S).

2. A system according to claim 1, wherein the gate means comprises logic gates (54, 55) and a transistor (56) responsive to a signal from one of logic gates for allowing the clutch current to flow.

3. A system according to claim 1 or 2, wherein each of the first driving range switch (50) and the second driving range switch (61) operates to produce a respective first signal, when each switch is turned off.

## Patentansprüche

1. Steuerungssystem für den Kupplungsstrom einer elektromagnetischen Kupplung (1) für ein Fahrzeug mit stufenlos variablem Getriebe · (4) und einem Wählhebel (60) zum Auswählen eines von mehreren Betriebsbereichen des stufenlos variablen Getriebes, wobei sich erste und zweite Fahrbereiche im Getriebeverhältnis unterscheiden, mit einem ersten Wählhebelschalter (50) und einem zweiten Wählhebelschalter (61), die in entsprechenden Positionen des Wählhebels (60) ansprechen, um einen Bereichswechsel zwischen dem ersten und dem zweiten Fahrbereich vorzunehmen, um ein entsprechendes erstes Signal zu erzeugen;

mit einem auf das erste Signal ansprechenden Verzögerungsschaltkreis (52, 53, 62, 63) zum verzögerten Erzeugen eines zweiten Signals (S);

und mit einer auf das zweite Signal (S) ansprechenden Gattereinrichtung (54), die ein Fließen des Kupplungsstroms erlaubt;

wodurch die Kupplung (1) während des Wählvorganges durch die Verzögerung des zweiten Signals (S) im eingekuppelten Zustand verbleibt.

2. Steuerungssystem nach Anspruch 1, dadurch gekennzeichnet, daß die Gattereinrichtung logische Glieder (54, 55, 56) und einen auf ein Signal eines der logischen Glieder ansprechenden Transistor (56) aufweist, der ein Fließen des Kupplungsstroms erlaubt.

3. Steuerungssystem nach Anspruch 1 oder 2, dadurch gekennzeichnet, daß sowohl der Wählhebelschalter (50) für den ersten Fahrbereich als auch der Wählhebelschalter (61) für den zweiten Fahrbereich so arbeitet, daß er ein entsprechendes erstes Signal erzeutn, wenn er ausgeschaltet ist.

## Revendications

1. Système pour commander le courant d'embrayage de l'embrayage ou de l'accouplement électromagnétique (1) d'un véhicule comportant une transmission à rapport variable en continu (4) et un levier de sélection (60) pour sélectionner un certain nombre de régimes de fonctionnement de ladite transmission variable en continu, ces régimes incluant un premier et un second régimes de marche avant correspondant à des rapports de transmission différents, le système comprenant un premier commutateur de régime de marche (50) et un second commutateur de régime de marche (61) qui opèrent à des positions respectives différentes du levier de sélection (60) pour commuter le régime de marche entre le premier et le second régimes de marche avant afin de produire respectivement un premier signal; un circuit à retard (52, 53, 62, 63) qui en réponse à ce premier signal produit un second signal (S) avec un certain retard; et une porte (54) qui, en réponse audit second signal (S) permet au courant d'embrayage de circuler, ce qui fait que l'embrayage (1) est maintenu appliqué durant l'opération de sélection par ladite temporisation du second signal (S).

2. Système selon la revendication 1, caractérisé en ce que la porte comprend des circuits logiques (54, 55) et un transistor (56) qui, en réponse à un signal de l'un des circuits logiques permet au courant d'embrayage de circuler.

3. Système selon la revendication 1 ou 2, caractérisé en ce que le commutateur du premier régime de marche (50) et le commutateur du second régime de marche (61) sont conçus pour produire respectivement un premier signal quand on ferme chacun des commutateurs.

FIG. 1a

FIG. 1b

FIG. 2

CONTROL SIGNAL

R-RANGE SIGNAL

DELAY CIRCUIT

15

51

52

53

54

55

56

50

60

61

62

63

S

FIG. 3

(a)  Ds-RANGE SWITCH

(b)  SIGNAL S

(c)  D-RANGE SWITCH